**Europäisches Patentamt**

(19) **European Patent Office**

**Office européen des brevets**

(11) Publication number: **0 067 821**
**B1**

(12) **EUROPEAN PATENT SPECIFICATION**

(45) Date of publication of patent specification: **15.01.86**

(51) Int. Cl.⁴: **G 02 B 6/38**

(21) Application number: **81902584.2**

(22) Date of filing: **17.09.81**

(86) International application number:
**PCT/SE81/00270**

(87) International publication number:
**WO 82/01077 01.04.82 Gazette 82/09**

(54) **A METHOD FOR OBTAINING AN ACCURATE CONCENTRIC FASTENING OF AN OPTICAL FIBRE IN A CONNECTOR.**

(30) Priority: **17.09.80 SE 8006532**

(43) Date of publication of application:
**29.12.82 Bulletin 82/52**

(45) Publication of the grant of the patent:
**15.01.86 Bulletin 86/03**

(84) Designated Contracting States:
**CH DE FR GB LI NL**

(56) References cited:
**GB-A-1 478 135**
**US-A-4 153 331**
**US-A-4 190 317**

(73) Proprietor: **Siemens Aktiengesellschaft**
**Berlin und München Wittelsbacherplatz 2**
**D-8000 München 2 (DE)**

(72) Inventor: **Rogstadius, Ivan**
**Sidensvansvägen 6**
**S-125 31 Älvsjö (SE)**

(74) Representative: **Jacobsson, Rune et al**
**JACOBSSON & BILLBERG PATENTBYRA AB S:T**
**Eriksgatan 77**
**S-113 32 Stockholm (SE)**

Courier Press, Leamington Spa, England.

## Description

### Field of the invention

The present invention relates to a method for obtaining an accurate concentric fastening of an optical fibre in a connector, which connector is provided with an axial through-hole for the optical fibre and provided with a bushing for concentric fixing of the fibre within the connector. The bushing is arranged to be compressed in axial direction by means of a tool in order to obtain a radial deformation resulting in a centering of the optical fibre within the connector.

### Background of the invention

Optical connectors of the type above are known in several embodiments, for instance as described in the British Patent No. 1 478 135 and in the U.S. Patent No. 4 190 317. In the connector (ferrule) described in the British Patent the bushing is positioned at a considerable distance inside the mouth (end) of the connector and is compressed axially in order to be expanded radially by means of a piston fixed within the connector by varnish, while the end of the optical fibre is after the compression of the bushing resulting in the concentric fastening of the fibre, fixed by means of resin in the mouth of the connector. Besides a relatively complicated construction, accuracy is with necessity lost by said distance from the mouth of the connector so that in all probability desired low optical damping can not be achieved. Errors in accuracy are also obtained by the method described in said British patent by the fact that the free end will wabble during the turning of the surface, so that different thickness of material is obtained in the bushing. The connector assembly described in said U.S. patent is also a relatively complicated construction. The bushing (insert member) is tapered in order to hold the fibre after a forced insertion of the bushing into a narrow bore, which according to the preferred embodiment is made in a second bushing arranged in a recess in the mouth of the connector. Due to several details, errors in accuracy are added resulting in a deteriorated optical damping. During the forced insertion of the tapered body there is also a risk for skew setting or "swelling", meaning deteriorated accuracy.

### Summary of the invention

The present invention is based upon the realization that the concentric fastening of the fibre requires for the decisive optical damping in the connector an accuracy in the order of magnitude of a few micrometers. The fastening should accordingly take place immediately at the mouth (end) of the connector. Moreover, as few means as possible enclosing the fibre should be utilized and the bushing be made in non-elastic material in order to keep as close tolerances as possible upon the manufacture of the bore for the fibre. The invention makes possible an improvement of the optical damping compared to previous techniques, and discloses a simplified method for obtaining the concentric holding of the optical fibre in the connector. This is achieved by the steps as defined in the claim.

### Brief description of the drawings

Figs. 1—3 illustrates schematically different manufacturing steps of the method according to the invention.

Figs. 4 and 5 show a coupling device for two connectors in a section along the line IV—IV in Fig. 5 and a section along the line V—V in Fig. 4, respectively.

### Description of the preferred embodiment

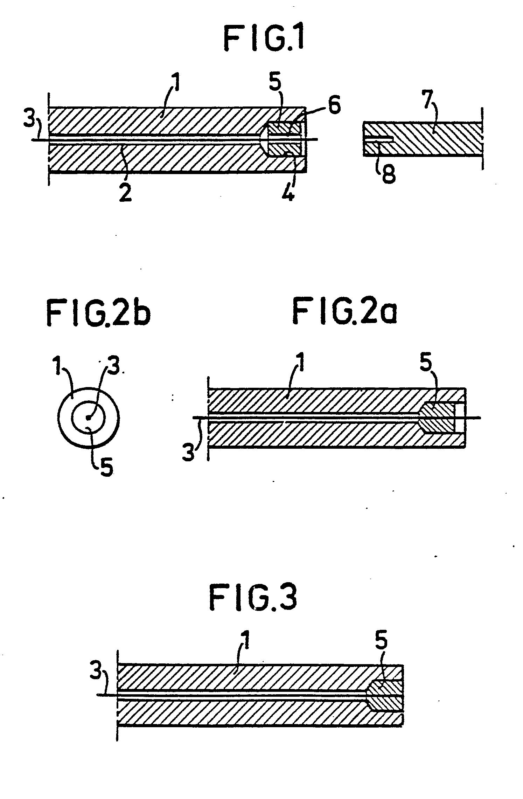

The connector 1 shown in Fig. 1 has an axial bore 2 for an optical fibre 3. The bore is, in the forward end or the coupling end enlarged to a recess 4, and a bushing 5 having a hole 6 in alignment with the extension of the bore 2 is inserted in the recess 4. Fig. 1 also shows the front end of a punch 7 having a hole 8 for receiving the optical fibre 3.

The bushing 5 is made of a soft metallic material, preferably a tin alloy, and the punch 7 is arranged for compressing the bushing in axial direction for obtaining a radial deformation. Fig. 2 illustrates the shape of the connector and the bushing after performed compression and Fig. 3 shows the final shape of the connector after grinding of the coupling end.

By the method defined above and using a bushing of a soft metallic material, a non-elastic and with maximum accuracy determined concentric fixing of an optical fibre is made possible. Since the concentricity is counted relative to the outer surface of the connector 1, the bushing 5 may preferably be manufactured in such a way that the solid rod is inserted into the recess 4 and is fixed therein by a limited compression by means of a suitable tool, whereupon the axial hole 6 is bored in the rod.

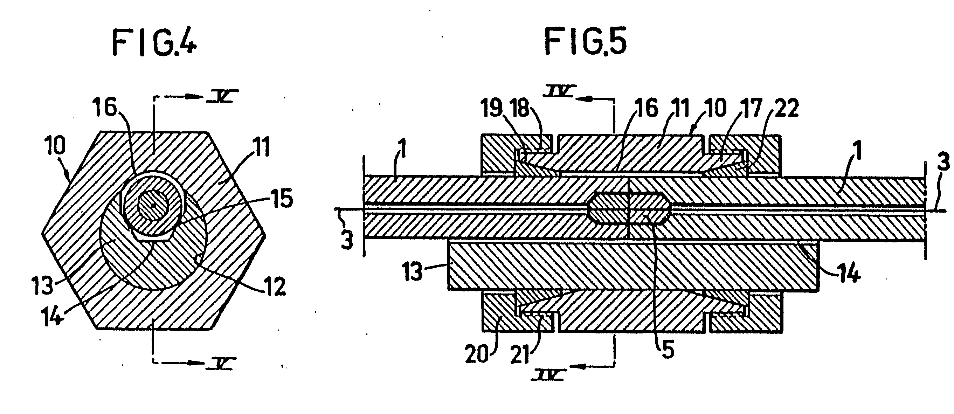

Due to the accurate centering obtained, an optical fibre in a connector can be accurately lined up with another connector in an optical coupling device. An appropriate embodiment of such a coupling device is shown in Figs. 4 and 5.

The coupling device 10 shown in Figs. 4 and 5 consists of a middle sleeve 11 having a central through-hole 12, in which a rod 13 is fixed. A longitudinal groove 14 with walls 15 is formed in the rod 13 for obtaining an inwardly decreasing cross-section of the groove. The hole 12 has above the groove 14 a portion 16 being somewhat enlarged and extending along the groove, said portion 16 being concentrically formed relative to a connector 1 inserted into the groove. The sleeve 11 is at the ends provided with projecting flanges 17 having external thread 18 and internal tapered surface 19. The threads 18 are arranged for co-operation with nuts 20 having internal threads 21 and the tapered surfaces 19 are arranged for co-operation with annular tapered wedge elements 22, which preferably have an axial slit.

When coupling two connectors 1 together by means of the coupling device 10 shown in Figs. 4 and 5, the connectors are inserted from the ends of the groove 14 to the abutment shown in Fig. 5. The nuts 20 are positioned so far outwardly, that wedge effect does not exist between the wedge elements 22 and the surfaces co-operating with the elements in order to allow the insertion of the connector. The nuts are thereafter screwed upon the threads 18 and the wedge elements are wedged up between the tapered surfaces 19 of the sleeve 11 and the outer surface of the connector 1 faced to the portion 16 and the roll 13.

An extraordinarily rigid coupling of the connectors 1 with high accuracy concerning the up-lining of the fibre ends relative each other is obtained by means of a coupling device 10. Moreover, the construction is simple in manufacture and allows a simple and rapid handling.

## Claim

A method for obtaining an accurate concentric fastening of an optical fibre (3) in the front end face of a connector (1) having the optical fibre passing through an axial bore (2) therein, wherein a ductile bushing (5) is arranged to surround and grip the fibre in a radially enlarged end portion (4) of said axial bore (2) opening into the front end face of the connector, characterized in the following steps:

(a) inserting into the enlarged end portion (4) of said axial bore (2) a solid rod (5) of a non-elastic ductile material having a slightly smaller diameter than that of the enlarged end portion (4) of the bore;

(b) applying from outside relative to the connector (1) an axial force to the rod for obtaining an expansion thereof in radial direction resulting in a fixing relative to the inner wall of the enlarged end portion (4) of the bore;

(c) forming an axial hole (6) in the rod (5) with an accurate concentricity relative to the outer surface of the connector;

(d) inserting the optical fibre (3) into said hole (6) in the rod;

(e) applying from outside relative to the connector an axial force to the rod for obtaining a deformation thereof in the radial direction resulting in a reduction of the diameter of the hole in the rod, thereby obtaining an accurate concentric gripping of the optical fibre in said thus radially deformed rod or bushing (5); and

(f) machining the front end face of the connector so that the front end face, the bushing and the optical fibre lie in the same plane.

## Revendication

Procédé d'obtention d'une fixation concentrique précise d'une fibre optique (3) dans la face d'extrémité avant d'un connecteur (1) qui comporte un passage intérieur axial (2) pour la fibre optique, une bague ductile (5) étant placée, de manière à entourer et serrer la fibre, dans une partie d'extrémité (4) radialement agrandie du dit passage axial (2) débouchant dans la face d'extrémité avant du connecteur, caractérisé en ce qu'il consiste à:

a) insérer, dans la partie d'extrémité agrandie (4) du passage axial (2), une tige pleine (5) en matière ductile non élastique dont le diamètre est un peu plus petit que celui de la partie d'extrémité agrandie (4) du passage axial;

b) appliquer, de l'extérieur du connecteur (1), une force axiale sur la tige pour obtenir l'expansion de celle-ci en direction radiale, de façon à la fixer par rapport à la paroi intérieure de la partie d'extrémité agrandie (4) du passage axial,

c) percer un trou axial (6) dans la tige (5), avec une concentricité précise par rapport à la surface extérieure du connecteur;

d) insérer la fibre optique (3) dans ce trou (6) de la tige;

e) appliquer, de l'extérieur du connecteur, une force axiale sur la tige, pour obtenir une déformation de celle-ci dans la direction radiale de façon à diminuer le diamètre du trou de la tige, ce que provoque un serrage concentrique précis de la fibre optique dans la tige ou bague (5) ainsi déformée radialement; et

f) usiner la face d'extrémité avant du connecteur, de sorte que la face d'extrémité avant, la bague et la fibre optique soient dans le même plan.

## Patentanspruch

Verfahren zum Erzielen einer genauen konzentrischen Befestigung einer optischen Faser (3) in der Vorderendfläche eines Konnektors (1), in welchem die optische Faser durch eine Axialbohrung (2) verläuft, wobei ein duktiler Hohlbolzen (5) angeordnet ist, um die Faser in einem radial erweiterten Endteil (4) der in der Vorderendfläche des Konnektors mündenden Axialbohrung (2) zu umgeben und zu fassen, gekennzeichnet durch die folgenden Schritte:

(a) Einsetzen eines festen Stiftes (5) aus einem nichtelastischen duktilen Material und mit einem geringfügig kleineren Durchmesser als der erweiterte Endteil (4) der Bohrung in den erweiterten Endteil (4) der Axialbohrung (2);

(b) Einwirken einer axialen Kraft von aussen relativ zum Konnektor (1) auf den Stift, um eine Ausdehnung desselben in radialer Richtung zu erzielen, was zu einer Befestigung relativ zur Innenwand des erweiterten Endteils (4) der Bohrung führt;

(c) Bilden eines Axialdurchgangs (6) im Stift (5) mit einer relativ zur Aussenfläche des Konnektors genauen Konzentrizität;

(d) Einsetzen der optischen Faser (3) in den Durchgang (6) des Stiftes;

(e) Einwirken einer axialen Kraft von aussen relativ zum Konnektor auf den Stift, um eine Verformung desselben in der radialen Richtung zu erzielen, was eine Verringerung des Durchmessers des Durchgangs im Stift bewirkt, wodurch eine genau konzentrische Fassung der optischen Faser in dem auf diese Weise radial verformten Stift oder Hohlbolzen (5) erhalten wird; und

(f) Bearbeiten der Vorderendflächen des Konnektors, so dass die Vorderendfläche, der Hohlbolzen und die optische Faser in der gleichen Ebene liegen.

# FIG.1

# FIG.2b          FIG.2a

# FIG.3

# FIG.4

# FIG.5

0 067 821